# FASCICULE DE BREVET EUROPEEN

(11) **EP 1 652 733 B1**
(45) Date de publication et mention de la délivrance du brevet: **19.11.2008**
(21) Numéro de dépôt: 05291947.9
(22) Date de dépôt: 20.09.2005
(51) Int. Cl.: B60R 19/18, B60R 21/34

(54) **Pièce de carénage de pare-chocs**
Stromlinienförmige Vorrichtung für einen Stossfänger für ein Kraftfahrzeug
Streamlining piece for vehicle bumper

(30) Priorité: 08.10.2004 FR 0410671
(43) Date de publication de la demande: 03.05.2006
(73) Titulaire: Faurecia Bloc Avant, 92000 Nanterre (FR)
(72) Inventeur: Diaw, Baye, 25420 Courcelles les Montbeliard (FR); Berne, Sébastien, 70400 Luze (FR); Corvasce, Raymond, 25150 Pont de Roide (FR)
(74) Mandataire: Domenego, Bertrand

(56) Documents cités:
- EP-A- 1 038 732
- EP-A- 1 067 039
- EP-A- 1 369 308
- EP-A- 1 433 664
- DE-A1- 10 253 270

## Description

La présente invention concerne une pièce de carénage de pare-chocs de véhicule automobile, comprenant une paroi en matière plastique, prévue pour être fixée sur la structure du véhicule et définir une face de canalisation d'air sous le pare-chocs, cette paroi étant formée avec un réseau de nervures de rigidification.

Une telle pièce est par exemple décrite dans le document EP 1 038 732.

Dans un ensemble de pare-chocs, constitué d'une poutre de pare-chocs et d'un carénage du type précité, la poutre assure la fonction d'absorption de choc (réparabilité et contribution au choc grande vitesse), tandis que la pièce de carénage contribue au bon comportement du pare-chocs en « choc piéton ». On rappelle que le choc « grande vitesse » est un choc frontal tel que celui qui peut se produire lors d'un accident de la route, par percussion d'un autre véhicule automobile. Lors d'un tel choc, le véhicule automobile, en particulier sa poutre de pare-chocs et son châssis, doit absorber une énergie importante en vue de limiter les risques de blessures des occupants.

Le choc dit « piéton » est un choc à 40 km/h contre des éléments simulant un piéton, et en particulier ses jambes. L'ensemble de pare-chocs doit être conçu de telle façon que, lors d'un tel choc, les risques de blessures graves du piéton, notamment de ses genoux, soient limités.

L'invention a pour but d'améliorer le comportement de l'ensemble de pare-chocs en cas de choc à grande vitesse sans détériorer ses performances en choc « piéton ».

A cet effet, conformément à l'invention, une pièce de carénage du type précité comprend en outre une traverse de chocs ayant une structure alvéolaire, solidaire de ladite paroi, et réalisée au moins partiellement en métal.

Selon d'autres caractéristiques, optionnelles de l'invention :
- ladite traverse de chocs comprend une poutre métallique creuse, s'étendant essentiellement de façon transversale le long du bord arrière de la paroi ;
- la poutre métallique est un profilé en U ;
- la traverse de chocs comporte des nervures en matière plastique formées à l'intérieur de la poutre, qui définissent les alvéoles de la structure alvéolaire ;
- les nervures de la traverse de chocs s'étendent de façon oblique par rapport aux directions transversale et longitudinale, en alternance selon deux directions sensiblement orthogonales ;
- la pièce de carénage comprend, de chaque côté latéral de la paroi, un bloc d'absorption de choc en matière plastique, qui présente une structure alvéolaire ;
- lesdits blocs d'absorption sont formés d'une pièce avec la paroi ;
- la traverse de chocs comprend des parties de fixation à la structure du véhicule, au moyen desquelles la pièce de carénage est fixée sur la structure ;
- les blocs d'absorption s'étendent dans le prolongement longitudinal des parties de fixation de la traverse de chocs à la structure du véhicule ;
- le réseau de nervures de rigidification est formé sur la paroi le long de son bord avant et à partir de ce dernier ; et
- la pièce de carénage est réalisée par surmoulage de matière plastique sur la partie métallique de la traverse de chocs.

Un mode particulier de réalisation de l'invention va maintenant être décrit en référence aux dessins annexés, sur lesquels :
- la Figure 1 est une vue schématique, en perspective coupée, d'une partie avant de véhicule automobile, comportant une pièce de carénage conforme à l'invention ; et
- la Figure 2 est une vue en perspective, dans une direction différente, de la pièce de carénage de la Figure 1, et des longerons et prolonges auxquels elle est fixée.

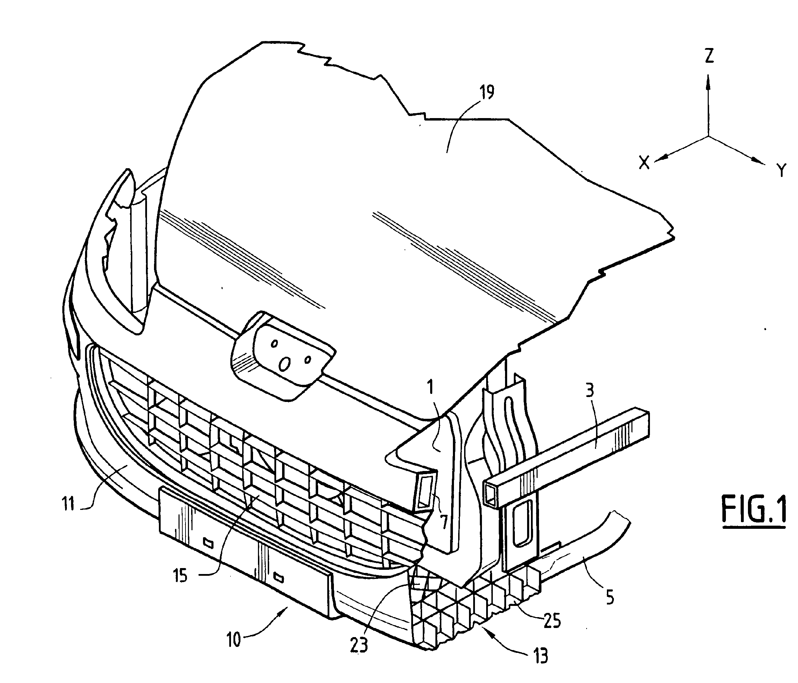

Sur la Figure 1, on a représenté une partie avant de véhicule automobile, orientée selon le système d'axes usuel X, Y, Z, dans lequel :
- l'axe X est l'axe longitudinal du véhicule, orienté d'arrière en avant ;
- l'axe Y est l'axe transversal orienté de la droite vers la gauche, en considérant le sens de marche du véhicule ; et
- l'axe Z est l'axe vertical orienté du bas vers le haut.

Dans toute la description qui va suivre, les termes d'orientation et de position s'entendront par rapport à ce système d'axes.

Cette partie avant de véhicule comprend la façade avant 1 du véhicule, sur laquelle sont montés notamment le radiateur du système de refroidissement, et le (ou les) groupe(s) motoventilateur(s), non représentés.

La façade avant 1 est fixée sur la structure du véhicule, dont on a représenté les parties d'extrémité avant d'un longeron 3, et d'une barre longitudinale ou « prolonge » 5. La prolonge 5 est une barre de structure solidaire du berceau moteur, et s'étend sensiblement longitudinalement, au-dessous du longeron 3.

La partie avant du véhicule, qui est représentée partiellement, comprend également une poutre de pare-chocs 7, fixée à l'extrémité avant du longeron respectif 3, de chaque côté du véhicule.

La partie avant comprend d'autre part un ensemble 10 de carénage du pare-chocs 7, qui comporte lui-même une première pièce de carénage 11 formant peau de pare-chocs, et une deuxième pièce de carénage 13 formant cloison inférieure.

L'ensemble de carénage est généralement symétrique par rapport au plan médian vertical longitudinal YZ. En particulier, la paroi de carénage 13 est symétrique par rapport à ce plan.

L'ensemble de carénage 10 est fixé à la façade avant 1 et à la structure du véhicule, en particulier aux longerons 3 et aux prolonges 5, de façon également symétrique par rapport au plan médian YZ.

La peau de pare-chocs 11 présente une grille d'entrée d'air 15. Lorsqu'elle est montée, la peau de pare-chocs 11 définit une paroi essentiellement verticale, s'étendant à l'avant de la face avant 1, espacée de cette dernière, la poutre de pare-chocs 7 s'étendant transversalement dans l'espace situé entre la peau de pare-chocs 11 et la façade avant 1. La peau de pare-chocs 11 est par exemple réalisée d'une pièce en matière plastique.

On a également représenté sur la Figure 1 une partie du capot avant 19 du véhicule, qui donne accès au compartiment moteur.

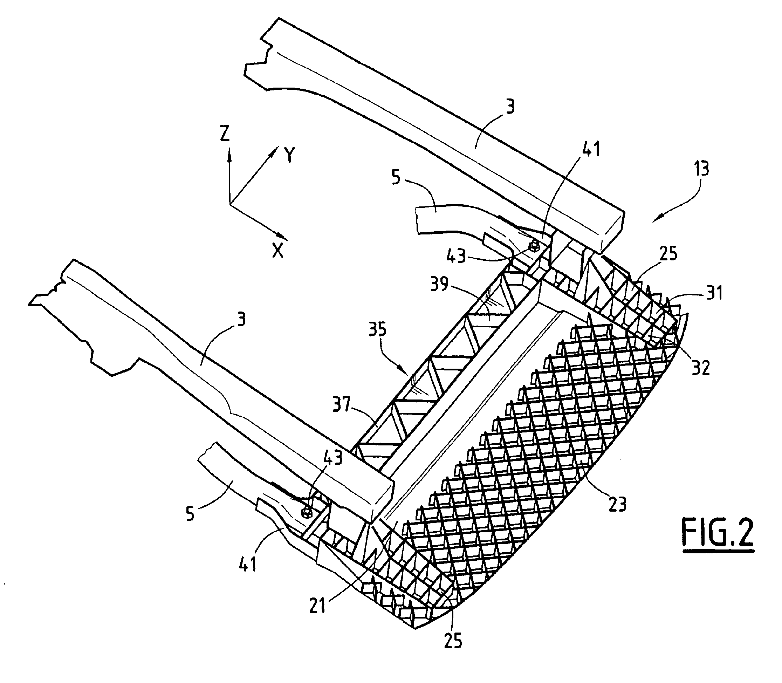

Comme cela apparaît mieux sur la Figure 2, la pièce inférieure de carénage 13 comprend une paroi 21 essentiellement plane, qui s'étend essentiellement horizontalement.

La pièce inférieure de carénage 13 assure la fermeture vers le bas de l'espace compris entre la peau de pare-chocs 11 et la façade avant 1, la paroi 21 définissant une face de canalisation d'air sous la poutre de pare-chocs 7. Plus précisément, la paroi 21 évite le recyclage des flux d'air incidents sur le radiateur ou les GMV, c'est-à-dire la recirculation de ces flux d'air par le bas de la peau de pare-chocs 11. La paroi de guidage d'air 21 évite ainsi une perte d'efficacité du système de refroidissement.

La paroi 21 est réalisée en matière plastique moulée, et est formée avec un réseau de nervures de rigidification 23, qui s'étend à partir du bord avant de la paroi 21, et sur toute la longueur de ce dernier. Les nervures 23 sont orientées de façon oblique par rapport aux directions transversale Y et longitudinale X, et selon deux directions sensiblement orthogonales. Le réseau de nervures 23 permet de rigidifier la paroi 21, et ainsi d'améliorer son comportement lors d'un choc standard dit « piéton ».

La paroi 21 peut être fixée au niveau de son bord avant au bord inférieur de la peau de pare-chocs 11, ou être réalisée d'une pièce avec cette dernière.

La pièce de carénage 13 comprend en outre, de chaque côté latéral de la paroi 21, et venu de matière avec cette dernière, un bloc d'absorption de choc 25 en matière plastique qui présente une structure alvéolaire.

Chaque bloc d'absorption 25 fait saillie de la paroi 21, du côté de sa face supérieure, et présente une forme extérieure générale parallélépipédique, allongée longitudinalement. Le bloc 25 a une structure alvéolaire régulière, définie par un réseau de cloisons 31, 32 verticales sécantes, dont certaines 31 sont orientées transversalement, et d'autres 32 sont orientées longitudinalement.

Les compartiments définis par le réseau de cloisons 31, 32, à l'intérieur du bloc 25, peuvent être laissés creux, ou remplis d'un matériau d'amortissement.

Les blocs 25 peuvent être reliés à la cloison 21 par l'intermédiaire de parties frangibles, au niveau desquelles les blocs 25 se désolidarisent de la paroi 21 lors d'un choc axial dépassant un seuil prédéterminé sur la pièce de carénage 13. Ce seuil d'intensité prédéterminé correspond à l'intensité d'un choc dit « réparabilité ».

Les chocs dits « réparabilité » sont des chocs standards répondant aux conditions suivantes : le véhicule percute à environ 16 km/h un obstacle rigide s'étendant sur environ 40% de la largeur de la poutre de pare-chocs. Lors de tels chocs, le châssis du véhicule, et en particulier ses longerons, ne doivent pas être déformés plastiquement, le coût des réparations induites par ce choc frontal devant être limité.

Les parties frangibles peuvent être des parties d'affaiblissement de matière s'étendant le long des cloisons extérieures latérales des blocs 25. Ces parties d'affaiblissement de matière sont par exemple des parties de plus faible épaisseur que la paroi 21, ou en variante, des parties ajourées définissant des discontinuités de matière.

Les parties frangibles peuvent s'étendre sur tout ou partie de la périphérie des blocs 25 en liaison avec la paroi 21.

On comprend que lors d'un choc « réparabilité », la cloison 21 se déforme plastiquement en compression et se désolidarise au moins partiellement des blocs 25, par rupture des parties frangibles. Ainsi, la déformation de la paroi 21 n'engendre pas de contrainte en flexion sur les blocs 25, de sorte que leur efficacité en compression axiale n'est pas compromise.

La pièce carénage 13 comprend d'autre part une traverse de chocs 35, solidaire de la paroi 21.

Cette traverse de chocs 35 comporte une poutre métallique creuse 37, qui s'étend transversalement le long du bord arrière de la paroi 21, et des nervures 39 en matière plastique, formées à l'intérieur de la poutre 37. Dans l'exemple représenté, la poutre métallique 37 est un profilé en U, qui comporte à chacune de ses extrémités latérales, un bras 41 de fixation à la prolonge 5 respective.

Les bras de fixation 41 s'étendent longitudinalement et ont également une section transversale en U, prévue pour recevoir à engagement l'extrémité avant de la prolonge respective 5.

Les nervures 29 définissent, à l'intérieur de la poutre métallique 37, les alvéoles de la structure alvéolaire. Ces nervures 39 s'étendent de façon oblique par rapport aux directions transversale Y et longitudinale X, en alternance selon deux directions sensiblement orthogonales, de façon à former des créneaux triangulaires à l'intérieur de la poutre 37.

La poutre 37 est dotée, au niveau des bras de fixation 41, de moyens de fixation 43 aux extrémités des prolonges 5. Dans l'exemple représenté, ces moyens de fixation sont des moyens de vissage (vis et trous de fixation), la pièce de carénage étant fixée sur la structure du véhicule grâce à ces moyens de vissage 43.

On notera que les blocs 25 en matière plastique s'étendent dans le prolongement des bras de fixation 41 et des barres de structure 5, selon l'axe longitudinal X.

De préférence, la pièce de carénage 13 est réalisée par surmoulage de matière plastique sur la poutre métallique 37. Les nervures 39 sont formées avec la paroi 21, le réseau de nervures 23, et les blocs 25, lors de la même opération de surmoulage et avec la même matière plastique.

On comprend que, grâce à la présence de la traverse de chocs 35 partiellement métallique, la pièce de carénage 13 participe à l'absorption de choc « grande vitesse », et améliore de ce fait le comportement de l'ensemble de pare-chocs. En effet, la traverse de chocs permet de transmettre les efforts transversaux vers la structure du véhicule.

## Revendications

1. Pièce de carénage de pare-chocs de véhicule automobile, comprenant une paroi (21) en matière plastique, prévue pour être fixée sur la structure (5) du véhicule et définir une face de canalisation d'air sous le pare-chocs, cette paroi (21) étant formée avec un réseau de nervures de rigidification (23),
**caractérisée en ce qu'**elle comprend en outre une traverse de chocs (35) ayant une structure alvéolaire, solidaire de ladite paroi (21), et réalisée au moins partiellement en métal.

2. Pièce de carénage suivant la revendication 1, **caractérisée en ce que** ladite traverse de chocs (35) comprend une poutre métallique creuse (37), s'étendant essentiellement de façon transversale le long du bord arrière de la paroi (21).

3. Pièce de carénage suivant la revendication 2, **caractérisée en ce que** la poutre métallique (37) est un profilé en U.

4. Pièce de carénage suivant la revendication 2 ou 3, **caractérisée en ce que** ladite traverse de chocs (35) comporte des nervures (39) en matière plastique formées à l'intérieur de la poutre (37), qui définissent les alvéoles de la structure alvéolaire.

5. Pièce de carénage suivant la revendication 4, **caractérisée en ce que** les nervures (39) de ladite traverse de chocs (35) s'étendent de façon oblique par rapport aux directions transversale (Y) et longitudinale (X), en alternance selon deux directions sensiblement orthogonales.

6. Pièce de carénage suivant l'une quelconque des revendications 1 à 5, **caractérisée en ce qu'**elle comprend, de chaque côté latéral de la paroi (21), un bloc (25) d'absorption de choc en matière plastique, qui présente une structure alvéolaire.

7. Pièce de carénage suivant la revendication 6, **caractérisée en ce que** les blocs d'absorption (25) sont formés d'une pièce avec la paroi (21).

8. Pièce de carénage suivant l'une quelconque des revendications 1 à 7, **caractérisée en ce que** la traverse de chocs (35) comprend des parties (41) de fixation à la structure (5) du véhicule, au moyen desquelles la pièce de carénage (13) est fixée sur la structure.

9. Pièce de carénage suivant la revendication 8, **caractérisée en ce que** les blocs d'absorption (25) s'étendent dans le prolongement longitudinal des parties de fixation (41) de la traverse de chocs (35) à la structure (5) du véhicule.

10. Pièce de carénage suivant l'une quelconque des revendications 1 à 9, **caractérisée en ce que** le réseau de nervures de rigidification (23) est formé sur la paroi (21) le long de son bord avant et à partir de ce dernier.

11. Pièce de carénage suivant l'une quelconque des revendications 1 à 10, **caractérisée en ce qu'**elle est réalisée par surmoulage de matière plastique sur la partie métallique (37) de la traverse de chocs (35).

## Claims

1. Fairing for a motor vehicle bumper, comprising a wall (21) of plastics material designed to be attached to the structure (5) of the vehicle and to form a surface channelling air beneath the bumper, this wall (21) being constructed with a network of stiffening ribs (23),
**characterised in that** it further comprises an impact cross-member (35) having an alveolar structure, of one piece with the said wall (21), and at least partly constructed of metal.

2. Fairing according to Claim 1, **characterised in that** the said impact cross-member (35) comprises a hollow metal beam (37) extending substantially transversely along the rear face of the wall (21).

3. Fairing according to Claim 2, **characterised in that** the metal beam (37) is a channel section.

4. Fairing according to Claim 2 or 3, **characterised in that** the said impact cross-member (35) comprises ribs (39) of plastics material formed within the beam (37) forming the alveoli of the alveolar structure.

5. Fairing according to Claim 4, **characterised in that** the ribs (39) of the said impact cross-member (35) extend obliquely in relation to the transverse (Y) and longitudinal (X) directions, alternately in two directions substantially at right angles.

6. Fairing according to any one of Claims 1 to 5, **characterised in that** it comprises an impact absorption block (25) of plastics material which has an alveolar structure on each side of the wall (21).

7. Fairing according to Claim 6, **characterised in that** the absorption blocks (25) are made of one piece with the wall (21).

8. Fairing according to any one of Claims 1 to 7, **characterised in that** the impact cross-member (35) incorporates parts (41) for attachment to the structure (5) of the vehicle, through which the fairing (13) is attached to the structure.

9. Fairing according to Claim 8, **characterised in that** the absorption blocks (25) extend along the longitudinal projection of the parts (41) attaching the impact cross-member (35) to the structure (5) of the vehicle.

10. Fairing according to any one of Claims 1 to 9, **characterised in that** the network of stiffening ribs (23) is formed on the wall (21) along and from its forward edge.

11. Fairing according to any one of Claims 1 to 10, **characterised in that** it is constructed by over-moulding plastics material onto the metal part (37) of the impact cross-member (35).

## Patentansprüche

1. Stoßstangenverkleidungsteil für Kraftfahrzeug, mit einer Wand (21) aus Kunststoff, die dazu vorgesehen ist, am Aufbau (5) des Fahrzeugs befestigt zu werden und eine Luftleitfläche unterhalb der Stoßstange zu definieren, wobei diese Wand (21) mit einem Gitter aus Versteifungsrippen (23) ausgebildet ist,
**dadurch gekennzeichnet, dass** es außerdem einen Stoßquerträger (35) umfasst, der eine wabenförmige Struktur hat, mit der Wand (21) fest verbunden ist und wenigstens teilweise aus Metall hergestellt ist.

2. Verkleidungsteil nach Anspruch 1, **dadurch gekennzeichnet, dass** der Stoßquerträger (35) einen metallischen Hohlträger (37) umfasst, der sich im Wesentlichen quer längs der Hinterkante der Wand (21) erstreckt.

3. Verkleidungsteil nach Anspruch 2, **dadurch gekennzeichnet, dass** der metallische Träger (37) ein U-Profil hat.

4. Verkleidungsteil nach Anspruch 2 oder 3, **dadurch gekennzeichnet, dass** der Stoßquerträger (35) Rippen (39) aus Kunststoff umfasst, die in dem Träger (37) gebildet sind und die Waben der wabenförmigen Struktur definieren.

5. Verkleidungsteil nach Anspruch 4, **dadurch gekennzeichnet, dass** sich die Rippen (39) des Stoßquerträgers (35) in Bezug auf die Querrichtung (Y) und die Längsrichtung (X) schräg und abwechselnd in zwei zueinander im Wesentlichen senkrechten Richtungen erstrecken.

6. Verkleidungsteil nach einem der Ansprüche 1 bis 5, **dadurch gekennzeichnet, dass** es auf jeder lateralen Seite der Wand (21) einen Stoßabsorptionsblock (25) aus Kunststoff umfasst, der eine wabenförmige Struktur besitzt.

7. Verkleidungsteil nach Anspruch 6, **dadurch gekennzeichnet, dass** die Absorptionsblöcke (25) einteilig mit der Wand (21) ausgebildet sind.

8. Verkleidungsteil nach einem der Ansprüche 1 bis 7, **dadurch gekennzeichnet, dass** der Stoßquerträger (35) Teile (41) für die Befestigung am Aufbau (5) des Fahrzeugs umfasst, mittels derer das Verkleidungsteil (13) am Aufbau befestigt ist.

9. Verkleidungsteil nach Anspruch 8, **dadurch gekennzeichnet, dass** sich die Absorptionsblöcke (25) in der longitudinalen Verlängerung der Teile (41) für die Befestigung des Stoßquerträgers (35) am Aufbau (5) des Fahrzeugs erstrecken.

10. Verkleidungsteil nach einem der Ansprüche 1 bis 9, **dadurch gekennzeichnet, dass** das Gitter (23) aus Versteifungsrippen an der Wand (21) längs ihrer Vorderkante und ausgehend von dieser Letzteren gebildet ist.

11. Verkleidungsteil nach einem der Ansprüche 1 bis 10, **dadurch gekennzeichnet, dass** es durch Formen von Kunststoff auf dem metallischen Teil (37) des Stoßquerträgers (35) verwirklicht ist.
